Europäisches Patentamt

European Patent Office

Office européen des brevets

(11) Publication number: **0 227 884 B1**

(12) # EUROPEAN PATENT SPECIFICATION

(45) Date of publication of patent specification: **09.12.92** (51) Int. Cl.⁵: **C05B 7/00**, C05D 1/00

(21) Application number: **86109620.4**

(22) Date of filing: **14.07.86**

(54) **Process for producing liquid fertilisers in high-concentration solution, and the fertilisers obtainable by the process.**

(30) Priority: **27.11.85 IT 8415785**

(43) Date of publication of application:
**08.07.87 Bulletin 87/28**

(45) Publication of the grant of the patent:
**09.12.92 Bulletin 92/50**

(84) Designated Contracting States:
**AT BE CH DE FR GB IT LI LU NL SE**

(56) References cited:
**FR-A- 2 086 213**
**US-A- 3 022 154**
**US-A- 3 856 500**
**US-A- 4 529 434**

(73) Proprietor: **CIFO S.p.A.**
**Via Oradour 6**
**I-40016 S.Giorgio in Piano (Bologna)(IT)**

(72) Inventor: **Zago, Cesare**
**Via Bastia 4**
**I-31100 Treviso(IT)**
Inventor: **Pradella, Turiddu**
**Via Enrico degli Scrovegni 2/a**
**I-35100 Padova(IT)**

(74) Representative: **Piovesana, Paolo**
**Corso del Popolo, 70**
**I-30172 Venezia-Mestre(IT)**

EP 0 227 884 B1

Rank Xerox (UK) Business Services

## Description

This invention relates to a process for producing liquid multinutrient fertilisers in high-concentration solution, and the fertilisers obtainable by the process.

Fertilisers are known consisting of a ternary solution of nitrogen, phosphorus and potassium in various percentages. They are generally distributed over the soil by conventional distributing machines such as pumps fitted with a sprayer bar, and enable fertilising, deweeding, geodisinfestation and/or other antiparasitic treatments to be carried out in a single passage with controlled and predetermined uniform distribution. However, a serious drawback of known liquid fertilisers is the rather low limit to their obtainable maximum concentration (about 25%).

Although this generally represents a somewhat serious problem in that it results in high storage and handling costs for volumes which become greater the quantity of fertiliser to be distributed, it represents an even more serious problem where the fertiliser is to be distributed by helicopter, because of the greater costs involved in this distribution system.

It is possible to increase the fertiliser concentration by using suspensions instead of solutions. In this manner it is possible to reach concentration values of 50-60%, but with other considerable limitations, in that:

- special equipment other than pumps with a sprayer bar has to be used for their distribution,
- special tanks provided with a mixer, which inter alia results in energy consumption, have to be used for their storage,
- the suspensions have to be used within a very short time (3 or 4 days at the most) from their preparation,
- pollution is caused because of the loss of about 50% of the distributed product by lixiviation and solid formation by the soil,
- the fertiliser cannot be mixed with the herbicide and insecticide (these having to be distributed with subsequent passages), and their distribution becomes non-uniform and incontrollable.

In addition known ternary fertilisers, whether in solution or suspension form, contain potassium in the form of chloride or sulphate, and this represents a serious drawback in that chlorine and sulphur are poisonous to crops.

Liquid multinutrient fertilisers are well known. US-A-3022154 discloses a concentrated liquid fertiliser obtained by reacting superphosphoric acid with potassium hydroxide at a pH value of 7.0 to 11.5, thus yelding a potassium polyphosphate, which is caused to react with a nitrogen-bearing material (urea, ammonium nitrate or diammonium phosphate).

FR-A-2086213 discloses a process which, by using extraction phosphoric acid, potassium hydroxide and urea, leans to obtain, under temperature and pH control, a multinutrient fertiliser containing ureic nitrogen, phosphoric anhydride in ortho and polyphosphatic form and potassium hydroxide.

US-A-3856500 discloses a process for preparing a liquid fertilizer consisting of potassium polyphosphates containing a suspension of finely divided solid micronutrients (iron, zinc, copper, manganese) and, if a ternary fertilizer is required, nitrogen in form of ammonium phosphate, ammonium tiosulphate and/or urea.

US-A-4529434 teaches to increase phosphorous uptake in plant tissue, through foliar application and therefore without resorting all the chemical phenomena interesting the soil and the root apparatus of the plants. The raw materials used to produces the fertilizer comprise potassium phosphate and activated carbon.

The object of the invention is to produce fertilisers having the merits of known fertilisers both in solution and in suspension form, but which at the same time obviate their drawbacks.

This object is attained according to the invention by a process for producing liquid multinutrient fertilisers in high-concentration solution, as described in claim 1.

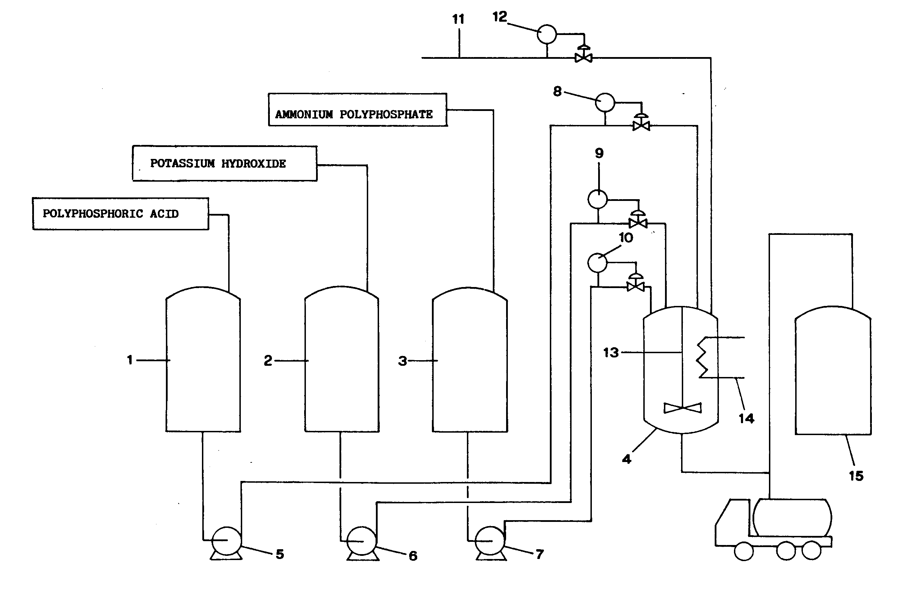

A preferred embodiment of the present invention is described in detail hereinafter with reference to the accompanying drawing which shows a block diagram of a plant for implementing the process according to the invention.

As shown on the drawing, to implement the process according to the invention a plant is used comprising three tanks 1, 2 and 3 for polyphosphoric acid, potassium hydroxide solution and ammonium polysphosphate respectively.

The polyphosphoric acid is of "thermic" type, ie with a phosphoric anhydride content of between 56 and 85%.

The tanks 1, 2 and 3 are connected to a single reactor 4 by pumps 5, 5, 7 respectively, and by way of conventional shut-off and control valve assemblies 8, 9, 10.

A water feed pipe 11 also provided with conventional shut-off and control valve assemblies 12 is connected to the said reactor 4. The reactor 4 is provided with a stirrer 13 and a cooling system 14 for removing the heat generated by the exothermic reaction, to thus maintain the temperature of the obtained solution within predetermined limits.

One or more tanks 15 for the final product are also connected to the reactor 4.

Generally, according to the process of the invention, the raw materials ("thermic" polyphosphoric acid, potassium hydroxide and ammonium polyphospate) contained in the tanks 1, 2, 3 respectively are fed in the required quantities into the reactor 4 into which water is also fed.

Water is firstly fed into the reactor, followed by caustic potash and acid in stoichiometric quantity, and ammonium polyphosphate. The potassium hydroxide solutiion reacts with the polyphosphoric acid to form an aqueous potassium polyphosphate solution comprising hydrated potassium orthophosphate, hydrate potassium pyrophosphate and tripotassium phosphate. As the potassium polyphosphate solution forms, it reacts with the ammonium polyphosphate contained in the reactor 4 to form a ternary solution of ammonia nitrogen, phosphoric anhydride in ortho and polyphosphatic form and potassium hydroxide, as a blend.

The reaction between the polyphosphoric acid and potassium hydroxide is strongly exothermic. However to prevent the heat of reaction decomposing the ammonium polyphosphate at high temperature and causing loss of water and ammonia by evaporation, thus altering the final product concentration, the cooling system 14 is provided to keep the temperature within the reactor 4 at the required value.

Moreover, in order to prevent the formation of soluble salts in the reaction between potassium hydroxide and polyphosphoric acid, a pH control system is provided to maintain the pH within the reactor 4 at between 6 and 8.

Finally, the reaction is initiated after creating within the reactor 4 a thermal buffer which can consist either of water itself or of a certain quantity of the final product to be obtained.

In all cases, the final product obtained is a ternary solution of nitrogen, phosphorus and potassium of high concentration (up to about 50%) which can be expressed in the form (N.P.K.), in which N, P and K are whole numbers indicating the percentage of the corresponding substances nitrogen, phosphoric anhydride and potassium hydroxide in the solution.

The process according to the invention described heretofore enables liquid fertilisers to be obtained which are much more advantageous than known liquid fertilisers both of the solution and of the suspension type.

Compared with the former, the liquid fertiliser obtainable by the process according to the invention can be produced in a much higher concentration (currently up to 50%), thus reducing storage, transport and distribution costs for equal amounts of fertiliser to be distributed.

Compared with the latter, it has all the advantages of a fertiliser in solution over fertilisers in suspension, and in particular:

- easy distribution,
- elimination of special storage tanks provided with mixers,
- usability of the fertiliser even after a lengthy period following its preparation,
- the possibility of mixing the fertiliser with the herbicide and insecticide to allow a single overall treatment of the soil, with uniform and controlled distribution.

Finally, compared with both types, the fertiliser obtainable by the process according to the invention has the important advantage of containing potassium in the form of hydroxide, ie neither as chloride not as sulphate. Consequently neither chlorine nor sulphur are fed into the soil, these representing a potential danger to crops.

The following examples will further clarify the invention.

EXAMPLE 1 - Production of fertiliser 3.21.21

The fertiliser 3.21.21 consists of a ternary solution of nitrogen, phosphorus and potassium having the following composition (by weight):

| | |
|---|---|
| Nitrogen | 3% |
| Phosphoric anhydride | 21% |
| Potassium hydroxide | 21% |

The following were fed into a reactor in order to produce it:

| Water | 75.8 kg |
|---|---|
| 48% potassium hydroxide solution | 438 kg |
| 58% potassium polyphosphoric acid | 186.2 kg |
| Ammonium polyphospate (10.34.0) | 300 kg. |

As the constituents were fed in the stated order into the reactor they were mixed, the temperature being simultaneously controlled at around ambient temperature.

On termination of the reaction, 1000 kg of ternary fertiliser 3.21.21 were obtained.

EXAMPLE 2 - Production of fertiliser 3.26.18

The following were fed into the reactor:

| Water | 69.9 kg |
|---|---|
| 48% potassium hydroxide solution | 375 kg |
| 58% thermic polyphosphoric acid | 255.1 kg |
| Ammonium polysphosphate (10.34.0) | 300 kg |

On termination of the reaction, 1000 kg of ternary fertiliser 3.25.18 were obtained.

EXAMPLE 3 - Production of fertiliser 3.18.20

The following were fed into the reactor:

| Water | 149.5 kg |
|---|---|
| 48% potassium hydroxide solution | 416 kg |
| 58% thermic polyphosphoric acid | 134.5 kg |
| Ammonium polyphosphate (10.34.0) | 300 kg |

On termination of the reaction, 1000 kg of ternary fertilizer 3.18.20 were obtained.

**Claims**

1. A process for producing liquid multinutrient fertilisers of the type N,P,K in high-concentration solution, characterised by feeding into a reactor, in which a thermal buffer has been previously created with water and eventually with a prefixed quantity of the final product to be obtained and in which the temperature value is kept substantially at ambient temperature and the pH value is kept between 6 and 8, the stoichiometric quantities of polyphosphoric acid containing 56 to 86 % of phosphoric anhydride (thermic polyphosporic acid), ammonium polyphosphate and potassium hydroxide, according to the prefixed values of N, P and K of this final product to be obtained, thus yielding a solution of ammonia nitrogen, phosphorus expressed as phosphoric anhydride in ortho and pholysphatic form and potassium expresed as potassium oxide and derived from potassium hydroxide.

2. A process according to claim 1, characterised in that the components are fed into the reactor under stirring.

3. A liquid multinutrient fertiliser of the N,P,K type in high-concentration solution, obtained by the process according to claims 1 and/or 2 characterised by consisting of an aqueos solution of ammonia nitrogen, phosphorus expressed as phosphoric anhydride in ortho and polyphosphatic form, and potassium expressed as potassium oxide and derived from potassium hydroxide.

4. A liquid multinutrient fertiliser as claimed in claim 3, characterised by being of the 3.21.21. type.

5. A liquid multinutrient fertiliser as claimed in claim 3 characterised by being of the 3.25.18. type.

6. A liquid multinutrient fertiliser as claimed in claim 3 characterised by being of the 3.18.20. type.

**Patentansprüche**

1. Verfahren zur Herstellung flüssiger Multinährstoff-Düngemittel des Typs N,P,K in hochkonzentrierter Lösung, **dadurch gekennzeichnet,** daß in einen Reaktor, in welchem vorher mit Wasser und gegebenenfalls mit einer vorherbestimmten Menge des herzustellenden Endproduktes ein thermischer Puffer errichtet wurde und der Temperaturwert im wesentlichen auf Raumtemperatur und der pH-Wert zwischen 6 und 9 gehalten wird, die stöchiometrischen Mengen Polyphosphorsäure mit einem Gehalt von 56 % bis 86 % Phosphorsäureanhydrid (thermische Phosphorsäure), Ammoniumpolyphosphat und Kaliumhydroxid gemäß den vorherbestimmten Werten von N, P und K des zu erzielenden Endproduktes zugeführt werden, wodurch eine Lösung von Ammoniumstickstoff, Phosphor, ausgedrückt als Phosphorsäureanhydrid in Ortho- und Polyphosphat-Form, und Kalium, ausgedrückt als Kaliumoxid und von Kaliumhydroxid abgeleitet, erhalten wird.

2. Verfahren nach Anspruch 1, **dadurch gekennzeichnet,** daß die Bestandteile unter Rühren in den Reaktor eingeführt werden.

3. Flüssiges Multinährstoff-Düngemittel des Typs N,P,K in hochkonzentrierter Lösung, erhalten durch das Verfahren nach Anspruch 1 und/oder 2, **dadurch gekennzeichnet,** daß es aus einer wässerigen Lösung von Ammoniumstickstoff, Phosphor, ausgedrückt als Phosphorsäureanhydrid in Ortho- oder Polyphosphat-Form, und Kalium, ausgedrückt als Kaliumoxid und von Kaliumhydroxid abgeleitet, besteht.

4. Flüssiges Multinährstoff-Düngemittel nach Anspruch 3, **dadurch gekennzeichnet,** daß es vom Typ 3.21.21 ist.

5. Flüssiges Multinährstoff-Düngemittel nach Anspruch 3, **dadurch gekennzeichnet,** daß es vom Typ 3.25.18 ist.

6. Flüssiges Multinährstoff-Düngemittel nach Anspruch 3, **dadurch gekennzeichnet,** daß es vom Typ 3.18.20 ist.

**Revendications**

1. Procédé de production d'engrais liquides multinutritifs du type N, P, K en solution de haute concentration, caractérisé par l'envoi, dans un réacteur où un tampon thermique a préalablement été créé avec de l'eau et éventuellement avec une quantité prédéterminée du produit final à obtenir et où la valeur de température est maintenue sensiblement à la température ambiante et la valeur du pH est maintenue entre 6 et 8, des quantités stoechiométriques d'acide polyphosphorique contenant de 56 % à 86 % d'anhydride phosphorique (acide polyphosphorique thermique), de polyphosphate d'ammonium et d'hydroxyde de potassium, conformément aux valeurs prédéterminées de N, P et K dudit produit final à obtenir, donnant ainsi une solution d'azote ammoniacal, de phosphore exprimé en tant qu'anhydride phosphorique sous forme ortho- et polyphosphatique, et du potassium exprimé en tant qu'oxyde de potassium et dérivé de l'hydroxyde de potassium.

2. Procédé conforme à la revendication 1, caractérisé en ce que les composants sont envoyés dans le réacteur sous agitation.

3. Engrais liquide multinutritif du type N, P, K en solution de haute concentration, obtenu par le procédé conforme aux revendications 1 et/ou 2, caractérisé en ce qu'il consiste en une solution aqueuse d'azote ammoniacal, de phosphore exprimé en tant qu'anhydride phosphorique sous forme ortho- et polyphosphatique, et de potassium exprimé en tant qu'oxyde de potassium et dérivé de l'hydroxyde de potassium.

4. Engrais liquide multinutritif conforme à la revendication 3, caractérisé en ce qu'il est du type 3.21.21.

5. Engrais liquide multinutritif conforme à la revendication 3, caractérisé en ce qu'il est du type 3.25.18.

**6.** Engrais liquide multinutritif conforme à la revendication 3, caractérisé en ce qu'il est du type 3.18.20.

AMMONIUM POLYPHOSPHATE

POTASSIUM HYDROXIDE

POLYPHOSPHORIC ACID

EP 0 227 884 B1